(19) **Europäisches Patentamt / European Patent Office / Office européen des brevets**

(11) **EP 4 277 418 B1**

(12) **EUROPEAN PATENT SPECIFICATION**

(45) Date of publication and mention
of the grant of the patent:
**17.12.2025 Bulletin 2025/51**

(21) Application number: **21917123.8**

(22) Date of filing: **13.10.2021**

(51) International Patent Classification (IPC):
*H04W 74/00* (2009.01)   *H04W 74/0833* (2024.01)
*H04W 56/00* (2009.01)

(52) Cooperative Patent Classification (CPC):
**H04W 74/002; H04W 56/001; H04W 74/0833;**
**Y02D 30/70**

(86) International application number:
**PCT/CN2021/123418**

(87) International publication number:
**WO 2022/148081 (14.07.2022 Gazette 2022/28)**

(54) **RANDOM ACCESS METHOD, ACCESS CONTROL METHOD, AND TERMINAL, ACCESS POINT AND STORAGE MEDIUM**

DIREKTZUGRIFFSVERFAHREN, ZUGANGSSTEUERUNGSVERFAHREN UND ENDGERÄT, ZUGANGSPUNKT UND SPEICHERMEDIUM

PROCÉDÉ D'ACCÈS ALÉATOIRE, PROCÉDÉ DE COMMANDE D'ACCÈS, ET TERMINAL, POINT D'ACCÈS ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.01.2021 CN 202110009097**

(43) Date of publication of application:
**15.11.2023 Bulletin 2023/46**

(73) Proprietor: **ZTE Corporation**
**Shenzhen, Guangdong 518057 (CN)**

(72) Inventors:
• **XIA, Shuqiang**
  **Shenzhen, Guangdong 518057 (CN)**
• **HAO, Peng**
  **Shenzhen, Guangdong 518057 (CN)**
• **CHEN, Yijian**
  **Shenzhen, Guangdong 518057 (CN)**
• **XIE, Feng**
  **Shenzhen, Guangdong 518057 (CN)**
• **DAI, Bo**
  **Shenzhen, Guangdong 518057 (CN)**
• **YU, Guanghui**
  **Shenzhen, Guangdong 518057 (CN)**
• **HU, Liujun**
  **Shenzhen, Guangdong 518057 (CN)**

(74) Representative: **Casalonga**
**Casalonga & Partners**
**Bayerstraße 71/73**
**80335 München (DE)**

(56) References cited:
CN-A- 110 535 602    CN-A- 112 822 788
US-A1- 2019 104 551    US-A1- 2020 305 038

• ZTE: "Simplified MAC RAR for dedicated preamble", 3GPP DRAFT; R2-093150 SIMPLIFIED MAC RAR FOR DEDICATED PREAMBLE, 28 April 2009 (2009-04-28), San Francisco, USA, pages 1 - 4, XP050340867
• ERICSSON: "MAC RAR PDU Design", 3GPP DRAFT; R2-1708193 - MAC RAR PDU DESIGN, vol. RAN WG2, 20 August 2017 (2017-08-20), Berlin, Germany, pages 1 - 4, XP051318096

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- **NOKIA, ALCATEL-LUCENT SHANGHAI BELL: "NR Random Access Procedure", 3GPP DRAFT; R1-1704943_NR RANDOM ACCESS PROCEDURE, 3RD GENERATION PARTNERSHIP PROJECT (3GPP), vol. RAN WG1, 24 March 2017 (2017-03-24), Spokane, USA, pages 1 - 11, XP051250574**

# Description

## TECHNICAL FIELD

The present application relates to the field of wireless communication networks, and for example, to a random access method, an access control method, a terminal, an access point and a storage medium.

## BACKGROUND

With the deployment and application of various low-power access points such as micro cells, small cells, femtocells and relay nodes, cellular networks are showing an increasingly heterogeneous and dense trend. For the purpose of saving energy or reducing interference, some access points (APs) are in a closed state when services are sparse, and a terminal may select one from APs providing coverage to access the network service. However, the APs providing coverage are independent of APs providing capacity, and the APs providing coverage do not necessarily provide an optimal service for the terminal. The terminal only selects an AP to be accessed from APs in an operating state. In this case, it cannot ensure that the selected AP has an optimal quality of service, which will not only affect the communication efficiency of the terminal, but also easily cause waste of power or spectrum resources.

US2020/305038A1 discloses a method and WTRU for performing a random access procedure. The method begins by performing random access procedures to a plurality of coordinated TRPs using the same resources for each TRP. Then the WTRU receives at least one random access response RAR. Based on the received responses, the WTRU selects one random access response of a particular TRP of the plurality of coordinated TRPs to continue the random access procedure, and stores the contents of the remaining access response. Then the WTRU continues the random access procedure with the particular TRP.

US2019/104551A1 discloses a method for use in a wireless transmit/receive unit WTRU for initial access using a system signature or signature sequence. The WTRU may receive a system signature from at least one transmission-reception points TRP of a plurality of TRPs. The system signature may be associated with a numerology, a network slice, a discontinuous transmission DTX state, a control channel characteristic, and/or a network service. The WTRU may then determine with use of a stored access table a resource selection, an initial access method of a plurality of initial access methods, a network slice, a network service, or a group of the at least one TRP. The WTRU may then receive at least one random access response RAR message from the at least one TRP. The WTRU may then associate with the at least on TRP based on the received at least one RAR message.

## SUMMARY

In a first aspect, the invention provides a random access method applied to a terminal which is defined by claim 1.

In a second aspect, the invention provides an access control method applied to an access point which is defined by claim 7.

In a third aspect, the invention provides a terminal which is defined by claim 13.

In a fourth aspect, the invention provides an access point which is defined by claim 14.

In a fifth aspect, the invention provides a computer-readable storage medium which is defined by claim 15.

Embodiments are defined in the dependent claims.

## BRIEF DESCRIPTION OF THE DRAWINGS

FIG. 1 is a flow chart of a random access method, in accordance with an embodiment;

FIG. 2 is a schematic diagram of a random access procedure, in accordance with an embodiment;

FIG. 3 is a schematic diagram illustrating a corresponding relationship between a timing pilot signal, a PDCCH and a RAR, in accordance with an embodiment;

FIG. 4 is a schematic diagram illustrating a corresponding relationship between a timing pilot signal, a PDCCH and a RAR, in accordance with another embodiment;

FIG. 5 is a schematic diagram illustrating a corresponding relationship between a timing pilot signal, a PDCCH and a RAR, in accordance with yet another embodiment;

FIG. 6 is a flow chart of an access control method, in accordance with an embodiment;

FIG. 7 is a schematic structural diagram of a random access apparatus, in accordance with an embodiment;

FIG. 8 is a schematic structural diagram of an access control apparatus, in accordance with an embodiment;

FIG. 9 is a schematic structural diagram of hardware of a terminal, in accordance with an embodiment; and

FIG. 10 is a schematic structural diagram of hardware of an access point, in accordance with an embodiment.

<u>DETAILED DESCRIPTION</u>

The present application will be described below with reference to the drawings and embodiments. The specific embodiments described herein are merely used for explaining the present application. For ease of description, only parts relevant to the present application are shown in the drawings.

In embodiments of the present application, a random access method is provided. A terminal receives a timing pilot signal, so as to select an access point (AP) to be accessed from APs capable of responding to a physical random access channel (PRACH), which extends selectable access points and enables the terminal to obtain a high quality of service.

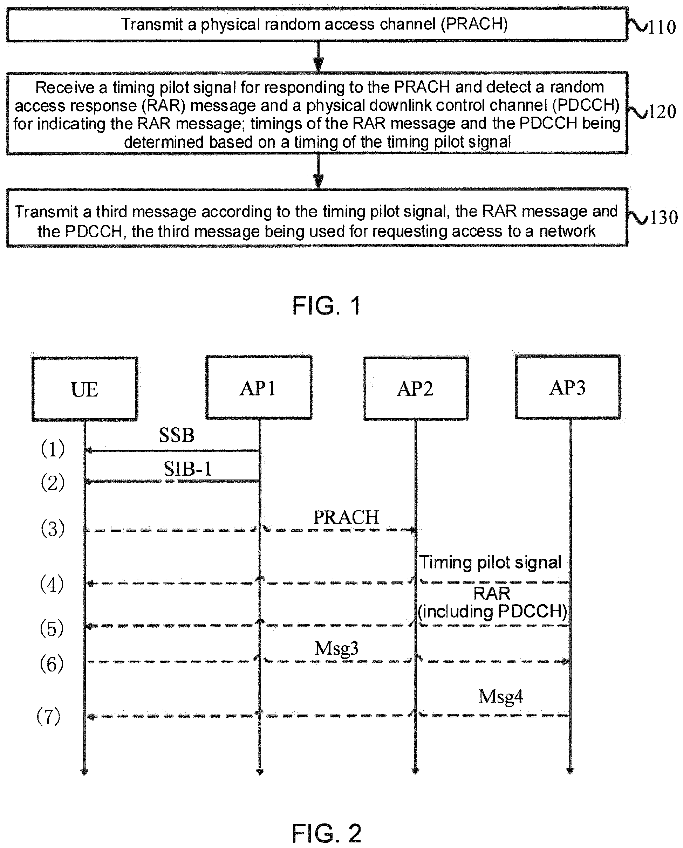

FIG. 1 is a flow chart of a random access method, in accordance with an embodiment. As shown in FIG. 1, the method provided by this embodiment includes steps 110 to 130.

In step 110, a physical random access channel (PRACH) is transmitted.

In step 120, a timing pilot signal for responding to the PRACH is received, and a random access response (RAR) message and a physical downlink control channel (PDCCH) for indicating the RAR message are detected, timings of the RAR message and the PDCCH being determined based on a timing of the timing pilot signal.

Determining a timing of the RAR message based on the timing of the timing pilot signal, includes: the timing of the RAR message being same as the timing of the timing pilot signal; or determining the timing of the RAR message based on the timing of the timing pilot signal, e.g., adjusting the timing of the RAR message based on the timing of the timing pilot signal according to a pilot associated with the RAR message. Determining a timing of the PDCCH based on the timing of the timing pilot signal is similar to determining the timing of the RAR message based on the timing of the timing pilot signal. For example, the timing pilot signal, the RAR message and the PDCCH have same timing information.

In step 130, a third message is transmitted according to the timing pilot signal, the RAR message and the PDCCH, the third message being used for requesting access to a network.

In this embodiment, the terminal is, for example, a user equipment (UE). The UE transmits the PRACH, and there may be one or more APs on a network side receiving the PRACH transmitted by the UE. After receiving the PRACH, each AP can transmit a timing pilot signal responding to the PRACH to the UE. A timing of the timing pilot signal may be same as or different from a timing of a synchronization signal and physical broadcast channel (PBCH) block (SSB) or a SIB-1 of a system information block (SIB). After transmitting the timing pilot signal, each AP further transmits a RAR message and a PDCCH indicating the RAR message, and timings of the RAR message and the PDCCH are related to the timing of the timing pilot signal transmitted. On this basis, each AP that transmits a relevant timing pilot signal, RAR message and PDCCH may be used as a candidate AP for UE to access a network. The candidate AP is not limited to an AP in an operating state, so that the UE has more choices for accessing the network, and the UE may obtain the optimal quality of service.

FIG. 2 is a schematic diagram of a random access procedure, in accordance with an embodiment. In this embodiment, a set of APs that transmit the SSB or SIB-1 is denoted as AP1, a set of APs that receive the PRACH signal is denoted as AP2, and a set of APs that can provide services for the UE or allow the UE to access the network is denoted as AP3. As shown in FIG. 2, for a UE that wants to access a wireless network, the UE transmits a PRACH signal according to an indication of the SIB-1 of the AP1. The PRACH signal may be received by one or more APs. The APs that receive the PRACH signal constitute the AP2, and the AP2 includes APs that transmit the SSB or SIB-1, and may further include APs that do not transmit the SSB or SIB-1, and even may include APs that are in a dormant state for the purpose of energy saving and interference reduction. The AP3 may be determined from the AP2 according to strength of the received PRACH signal, timing information, AP load and/or available resources. The AP3 may be determined by the APs in the AP2 by negotiating with each other, or determined by a central control node according to information reported by the AP2. After transmitting the timing pilot signal, the AP3 further transmits a RAR message and a PDCCH indicating the RAR message, and the RAR message and PDCCH follow the timing of the timing pilot signal.

The timing pilot signal corresponding to the PRACH and transmitted by the AP3 may be used not only for the UE to determine the timing information in a transmission process, but also for the UE to perform channel state measurement and channel estimation, etc. Since the SSB or SIB-1 is generally used for providing services for a UE within a large coverage area, a distance between the AP transmitting the SSB or SIB-1 and the UE is relatively long. The timing pilot signal provides services for the UE transmitting the PRACH, and the AP transmitting the timing pilot signal is determined according to the strength of the received PRACH signal, the timing information, the AP load and/or available resources and is generally an AP with a relatively short distance from the UE transmitting the PRACH. The timing of the timing pilot signal may have a large difference from a timing of the UE, and may also have a large difference from a timing of the SSB or SIB-1.

The UE receives the timing pilot signal, and further detects the PDCCH and the RAR message in a case where the timing pilot signal is received successfully, and transmits Msg3 on the basis of successful detection of both the PDCCH and the RAR message. The Msg3 includes a UE identifier, etc., so as to make a request to the AP3 access to a network. On the basis of successfully detecting Msg3, the AP3 transmits Msg4 to inform the UE that the UE has accessed to a network successfully.

In an embodiment, the timing pilot signal satisfies at least one of: that an index of the PRACH satisfies a one-to-one relationship with the timing pilot signal; or that a random access-radio network temporary identity (RA-RNTI) of the PRACH satisfies a one-to-one relationship with the timing pilot signal.

In this embodiment, there is a one-to-one correspondence between the PRACH transmitted by the UE and the timing pilot signal, that is, the AP can determine the only timing pilot signal responding to the PRACH according to the index and/or RA-RNTI of the received PRACH.

There may be multiple timing pilot signals available on the network side, and different timing pilot signals may use different pilot sequences or use different resources. The network side determines a timing pilot signal to be transmitted to the UE according to the received PRACH, and may transmit the timing pilot signal within a preset time window. In some embodiments, a corresponding relationship between the index and/or RA-RNTI of the PRACH and the timing pilot signal is preset, for example, the network side indicates the corresponding relationship between the index and/or RA-RNTI of the PRACH and the timing pilot signal to the UE in system information such as SIB-1. On this basis, the timing pilot signal further corresponds to a PDCCH indicating a RAR message. At a receiving terminal, the UE detects the timing pilot signal within a predefined time window, and detects the RAR message and the PDCCH indicating the RAR message according to the timing of the timing pilot signal after successfully detecting the timing pilot signal.

In an embodiment, the third message includes an index of an optimal timing pilot signal (hereinafter referred to as optimal pilot signal index or optimal pilot index) obtained by measurement; and the timing pilot signal satisfies at least one of: that the index of the PRACH satisfies a one-to-many relationship with the timing pilot signal; or that the RA-RNTI of the PRACH satisfies a one-to-many relationship with the timing pilot signal.

In this embodiment, there is a one-to-many corresponding relationship between the PRACH transmitted by the UE and the timing pilot signal, that is, the AP can transmit multiple timing pilot signals for responding to the PRACH according to the index and/or RA-RNTI of the received PRACH. In some embodiments, a corresponding relationship between the index and/or RA-RNTI of the PRACH and the timing pilot signal is preset, for example, the network side indicates the corresponding relationship between the index and/or RA-RNTI of the PRACH and the timing pilot signal to the UE in system information such as SIB-1. For example, a 1-$N$($N$ is greater than 1) corresponding relationship is satisfied between the index and/or RA-RNTI of the PRACH and the timing pilot signal. After receiving the PRACH transmitted by the UE, the network side selects M timing pilot signals and transmits them within a preset time window according to the corresponding relationship, where N is greater than or equal to $M$ and $M$ is greater than 1 ($N \geq M > 1$). In some embodiments, precoding used by each timing pilot signal may be different, an AP used for transmitting each timing pilot signal may be different, and a timing of each timing pilot signal may be different.

At the receiving terminal, the UE detects the M timing pilot signals within the preset time window, and detects the RAR message and the PDCCH indicating the RAR message based on the optimal pilot signal index. If the detection of the M timing pilot signals is successful, the UE further reports the optimal pilot index detected in the Msg3 according to indication information in the RAR message. If the detection of the M timing pilot signals fails (none of the N timing pilot signals is detected), it can be considered that a random access request initiated by the UE fails, and the subsequent PDCCH indicating the RAR message may not be detected.

In an embodiment, each timing pilot signal corresponds to a different PDCCH, and each PDCCH indicates a different RAR message; or each timing pilot signal corresponds to a different PDCCH, and each PDCCH indicates a same RAR message; or each timing pilot signal corresponds to a same PDCCH, and each PDCCH indicates a same RAR message.

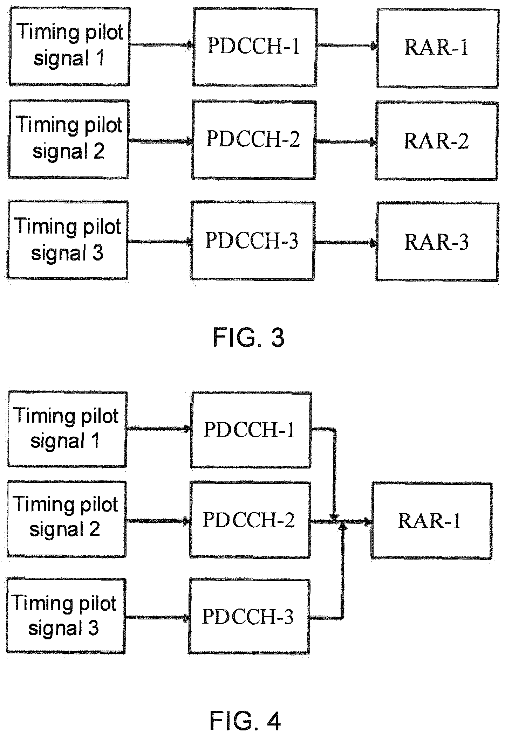

FIG. 3 is a schematic diagram illustrating a corresponding relationship between a timing pilot signal, a PDCCH and a RAR, in accordance with an embodiment. As shown in FIG. 3, each timing pilot signal corresponds to a PDCCH indicating a RAR message, different timing pilot signals correspond to different PDCCHs, and each PDCCH indicates a different RAR message.

FIG. 4 is a schematic diagram illustrating a corresponding relationship between a timing pilot signal, a PDCCH and a RAR, in accordance with another embodiment. As shown in FIG. 4, each timing pilot signal corresponds to a PDCCH indicating a RAR message, different timing pilot signals correspond to different PDCCHs, and each PDCCH indicates a same RAR message.

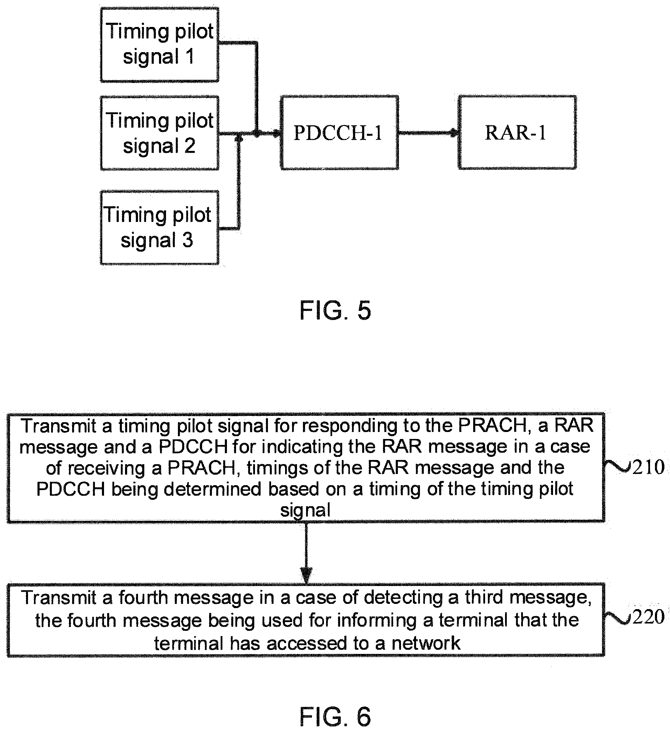

FIG. 5 is a schematic diagram illustrating a corresponding relationship between a timing pilot signal, a PDCCH and a RAR, in accordance with yet another embodiment. As shown in FIG. 5, each timing pilot corresponds to a PDCCH indicating a RAR message, different timing pilot signals correspond to a same PDCCH, and each PDCCH indicates a same RAR message.

In an embodiment, step 120 includes:
detecting, in a case of receiving the timing pilot signal within a preset time window, the RAR message and the PDCCH.

The method further includes:
step 140: not detecting, in a case of not receiving the timing pilot signal within the preset time window, the RAR message and the PDCCH.

In this embodiment, the AP transmits the timing pilot signal responding to the PRACH within the preset time window. If the UE does not detect the timing pilot signal within the preset time window, it is considered that the random access request fails, and a subsequent RAR and a PDCCH indicating the RAR message may not be detected, thereby reducing the complexity of the UE detecting the PDCCH, also accelerating the re-initiation of random access by the UE, and improving the access efficiency.

In an embodiment, the timing pilot signal is at least one in number; and each timing pilot signal occupies K control channel elements (CCEs), where K is an integer greater than 1.

In this embodiment, after receiving the PRACH transmitted by the UE, the network side can transmit one or more timing pilot signals responding to the PRACH. The timing pilot signal (or signals) are transmitted in a common search space configured by the network. Each timing pilot signal occupies $K$ ($K > 1$) CCEs.

In an embodiment, K is an element in an aggregation level set of the PDCCH; or K is determined according to an aggregation level of the PDCCH.

In this embodiment, there are two methods for determining a value of the K as follows.

Method 1: $K$ is a preset constant, and the aggregation level set of the PDCCH indicating the RAR message is denoted as S, for example, S = {1, 2, 4, 8, 16, 32}, and $K$ is an element in the set S, for example, $K$ is equal to 1 ($K = 1$).

Method 2: $K$ is determined by the aggregation level of the PDCCH indicating the RAR message, for example, in a case where the aggregation level (denoted as A) of the PDCCH indicating the RAR message is 1, 2, 4 or 8, $K$ is 1, 2, 4 or 8 accordingly, or $K = \left\lceil \dfrac{A}{P} \right\rceil$, where P is a preset integer greater than 1.

In an embodiment, the CCEs occupied by each timing pilot signal and CCEs occupied by a corresponding PDCCH belong to a same CCE candidate set; and position indexes of the CCEs occupied by each timing pilot signal in the CCE candidate set are same as or different from position indexes of the CCEs occupied by the corresponding PDCCH in the CCE candidate set.

In this embodiment, the CCEs occupied by each timing pilot signal and the CCEs occupied by the corresponding PDCCH belong to the same CCE candidate set. Assuming that the aggregation level of the PDCCH is A (A may be a value selected from 1, 2, 4, 8, 16 and 32), in order to improve flexibility of a system and reduce blocking probability of the PDCCH, the PDCCH may be transmitted at multiple candidate positions, where each position includes A CCEs. Assuming that the number of candidate positions is $Q$, and different positions are respectively represented by indexes 1, 2, 3, ..., $Q$, a position at which the timing pilot signal is transmitted is also one of the $Q$ positions.

In some embodiments, a position at which the timing pilot signal is transmitted and a position at which the PDCCH is transmitted belong to a same set, but may correspond to different position indexes. In this case, the timing pilot signal and the PDCCH may be transmitted in different time slots, or in a same time slot. Alternatively, a position at which the timing pilot signal is transmitted and a position at which the PDCCH is transmitted not only belong to a same set, but also correspond to a same position index, in which case the timing pilot signal and the PDCCH are transmitted in different time slots.

In an embodiment, the method further includes:
step 100: receiving a system message, the system message including at least one of: a relationship between the index of the PRACH and the timing pilot signal; or a relationship between the RA-RNTI of the PRACH and the timing pilot signal.

In this embodiment, there may be a one-to-one or one-to-many relationship between the index and/or RA-RNTI of the PRACH and the timing pilot signal; and the network side may inform a UE of the relationship between the index and/or RA-RNTI of the PRACH and the timing pilot signal in the system message such as SIB-1.

In embodiments of the present application, an access control method is provided. An AP that receives a PRACH can serve as a candidate access point for a UE to access a network, and transmits a timing pilot signal, a RAR message and a PDCCH indicating the RAR message to the UE, which extends access points that can be selected by the UE, and enables the terminal to obtain a high quality of service. For technical details that are not described in detail in these embodiments, reference may be made to any of the above embodiments.

FIG. 6 is a flow chart of an access control method, in accordance with an embodiment. As shown in FIG. 6, the method provided by this embodiment includes step 210 and step 220.

In step 210, in a case of receiving a PRACH, a timing pilot signal for responding to the PRACH, a RAR message and a PDCCH for indicating the RAR message are transmitted, timings of the RAR message and the PDCCH being determined based on a timing of the timing pilot signal. For example, the timing pilot signal, the RAR message and the PDCCH have same timing information.

In step 220, in a case of detecting a third message, a fourth message is transmitted, the fourth message being used for informing a terminal that the terminal has accessed to a network.

In this embodiment, the UE transmits the PRACH, and there may be one or more APs on a network side receiving the PRACH transmitted by the UE. After receiving the PRACH, each AP can transmit a timing pilot signal responding to the PRACH to the UE. A timing of the timing pilot signal may be same as or different from a timing of the SSB or SIB-1. After transmitting the timing pilot signal, each AP further transmits a RAR message and a PDCCH indicating the RAR message, and timings of the RAR message and the PDCCH are related to the timing of the timing pilot signal transmitted. After receiving the timing pilot signal, the UE transmits Msg3 to the AP transmitting the timing pilot signal, thereby making a request to the AP access to the network. After the AP detects Msg3, it transmits Msg4 to the UE to inform the UE that the UE has accessed to the network.

In an embodiment, step 210 includes: transmitting the timing pilot signal, the RAR message and the PDCCH according to an instruction of a control node or according to a negotiation result of an AP responding to the PRACH.

In this embodiment, the AP transmitting the timing pilot signal, the RAR message and the PDCCH may be determined according to strength of a received PRACH signal, timing information, AP load and/or available resources. The AP may be determined by APs receiving the PRACH signal by negotiating with each other, or determined by a central control node according to information reported by the APs receiving the PRACH signal. The RAR message and the PDCCH follow the timing of the timing pilot signal.

In an embodiment, the timing pilot signal satisfies at least one of: that an index of the PRACH satisfies a one-to-one relationship with the timing pilot signal; or that a RA-RNTI of the PRACH satisfies a one-to-one relationship with the timing pilot signal.

In an embodiment, the third message includes an index of an optimal timing pilot signal (hereinafter referred to as optimal pilot index) obtained by measurement; and the timing pilot signal satisfies at least one of: that an index of the PRACH satisfies a one-to-many relationship with the timing pilot signal; or that a RA-RNTI of the PRACH satisfies a one-to-many relationship with the timing pilot signal.

In an embodiment, each timing pilot signal corresponds to a different PDCCH, and each PDCCH indicates a different RAR message; or each timing pilot signal corresponds to a different PDCCH, and each PDCCH indicates a same RAR message; or each timing pilot signal corresponds to a same PDCCH, and each PDCCH indicates a same RAR message.

In an embodiment, the method further includes: step 230: updating, according to the optimal pilot index, precoding information and timing information of each timing pilot signal, and a set of APs transmitting the timing pilot signal.

In this embodiment, in a case where a one-to-many relationship is satisfied between the index and/or RA-RNTI of the PRACH and the timing pilot signal, precoding used by each timing pilot signal may be different, the set of APs transmitting each timing pilot signal may be different, and the timing information of each timing pilot signal may be different. The AP can update the precoding information and the timing information of each timing pilot signal and the set of APs transmitting the timing pilot signal, according to the optimal pilot index reported in the Msg3, i.e., the AP3 in the above embodiments, so as to further optimize the AP3 to enable the UE to obtain a good quality of service and achieve a high spectrum efficiency after random access is successful.

In an embodiment, transmitting the timing pilot signal for responding to the PRACH, includes:
determining the timing pilot signal for responding to the PRACH according to the PRACH, and transmitting the timing pilot signal for responding to the PRACH within a preset time window.

In an embodiment, the timing pilot signal is at least one in number; and each pilot signal occupies K CCEs, where $K$ is an integer greater than 1.

In an embodiment, $K$ is an element in an aggregation level set of the PDCCH; or $K$ is determined according to an aggregation level of the PDCCH.

In an embodiment, the CCEs occupied by each timing pilot signal and CCEs occupied by a corresponding PDCCH belong to a same CCE candidate set; and position indexes of the CCEs occupied by each timing pilot signal in the CCE candidate set are same as or different from position indexes of the CCEs occupied by the corresponding PDCCH in the CCE candidate set.

In an embodiment, the method further includes: step 200: transmitting a system message, the system message including at least one of: a relationship between an index of the PRACH and the timing pilot signal; or a relationship between a RA-RNTI of the PRACH and the timing pilot signal.

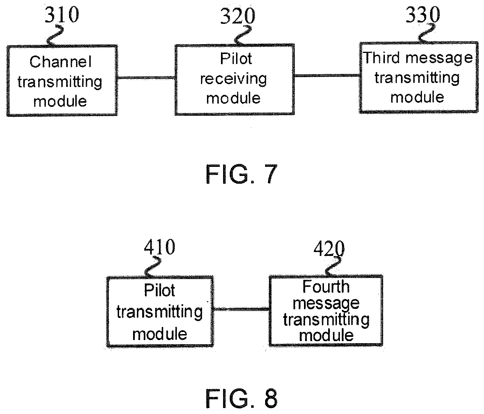

Embodiments of the present application provide a random access apparatus. FIG. 7 is a schematic structural diagram of a random access apparatus, in accordance with an embodiment. As shown in FIG. 7, the random access apparatus includes a channel transmitting module 310, a pilot receiving module 320 and a third message transmitting module 330.

The channel transmitting module 310 is configured to transmit a PRACH. The pilot receiving module 320 is configured to receive a timing pilot signal for responding to the PRACH, and detect a RAR message and a PDCCH for indicating the RAR message, where timings of the RAR message and the PDCCH are determined based on a timing of the timing pilot signal. The third message transmitting module 330 is configured to transmit a third message according to the timing pilot signal, the RAR message and the PDCCH, where the third message is used for requesting to access the network.

The random access apparatus in this embodiment selects an AP to be accessed among APs capable of responding to the PRACH by receiving the timing pilot signal, thereby extending selectable access points and enabling the terminal to obtain a high quality of service.

In an embodiment, the timing pilot signal satisfies at least one of: that an index of the PRACH satisfies a one-to-one relationship with the timing pilot signal; or a RA-RNTI of the PRACH satisfies a one-to-one relationship with the timing pilot signal.

In an embodiment, the third message includes an index of an optimal timing pilot signal obtained by measurement; and the timing pilot signal satisfies at least one of: that an index of the PRACH satisfies a one-to-many relationship with the timing pilot signal; or that a RA-RNTI of the PRACH satisfies a one-to-many relationship with the timing pilot signal.

In an embodiment, each timing pilot signal corresponds to a different PDCCH, and each PDCCH indicates a different RAR message; or each timing pilot signal corresponds to a different PDCCH, and each PDCCH indicates a same RAR message; or each timing pilot signal corresponds to a same PDCCH, and each PDCCH indicates a same RAR message.

In an embodiment, the pilot receiving module 320 is configured to detect the RAR message and the PDCCH in a case of receiving the timing pilot signal within a preset time window; and the pilot receiving module 320 is further configured to not detect the RAR message and the PDCCH in a case of not receiving the timing pilot signal within the preset time window.

In an embodiment, the timing pilot signal is at least one in number; and each timing pilot signal occupies $K$ CCEs, where $K$ is an integer greater than 1.

In an embodiment, $K$ is an element in an aggregation level set of the PDCCH; or $K$ is determined according to an aggregation level of the PDCCH.

In an embodiment, the CCEs occupied by each timing pilot signal and CCEs occupied by a corresponding PDCCH belong to a same CCE candidate set; and position indexes of the CCEs occupied by each timing pilot signal in the CCE candidate set are same as or different from position indexes of the CCEs occupied by the corresponding PDCCH in the CCE candidate set.

In an embodiment, the random access apparatus further includes: a system message receiving module configured to receive a system message; and the system message includes at least one of: a relationship between the index of the PRACH and the timing pilot signal; or a relationship between the RA-RNTI of the PRACH and the timing pilot signal.

The random access apparatus provided in this embodiment belongs to a same conception as the random access method provided in the above embodiments. For technical details that are not described in detail in this embodiment, reference may be made to any of the above embodiments, and this embodiment has same effect as performing the random access method.

Embodiments of the present application provide an access control apparatus. FIG. 8 is a schematic structural diagram of an access control apparatus, in accordance with an embodiment. As shown in FIG. 8, the access control apparatus includes a pilot transmitting module 410 and a fourth message transmitting module 420.

The pilot transmitting module 410 is configured to transmit a timing pilot signal for responding to a PRACH, a RAR message and a PDCCH for indicating the RAR message in a case of receiving a PRACH, where timings of the RAR message and the PDCCH are determined based on a timing of the timing pilot signal. The fourth message transmitting module 420 is configured to transmit a fourth message in a case of detecting a third message, where the fourth message us used for informing a terminal that the terminal has accessed to a network.

The access control apparatus in this embodiment transmits the timing pilot signal, the RAR message and the PDCCH indicating the RAR message to a UE, which extends access points that can be selected by the UE, and enables the terminal to obtain a high quality of service.

In an embodiment, the pilot transmitting module 410 is configured to transmit the timing pilot signal, the RAR message and the PDCCH according to an instruction of a control node or according to a negotiation result of an AP responding to the PRACH.

In an embodiment, the timing pilot signal satisfies at least one of: that an index of the PRACH satisfies a one-to-one relationship with the timing pilot signal; or that a RA-RNTI of the PRACH satisfies a one-to-one relationship with the timing pilot signal.

In an embodiment, the third message includes an index of an optimal timing pilot signal (hereinafter referred to as optimal pilot index) obtained by measurement; and the timing pilot signal satisfies at least one of: that an index of the PRACH satisfies a one-to-many relationship with the timing pilot signal; or that a RA-RNTI of the PRACH satisfies a one-to-many relationship with the timing pilot signal.

In an embodiment, each timing pilot signal corresponds to a different PDCCH, and each PDCCH indicates a different RAR message; or each timing pilot signal corresponds to a different PDCCH, and each PDCCH indicates a same RAR message; or each timing pilot signal corresponds to a same PDCCH, and each PDCCH indicates a same RAR message.

In an embodiment, the access control apparatus further includes: an update module configured to update, according to the optimal pilot index, precoding information and timing information of each timing pilot signal and a set of APs transmitting the timing pilot signal.

In an embodiment, the pilot transmitting module 410 includes: a pilot signal transmitting unit configured to determine a timing pilot signal for responding to the PRACH according to the PRACH, and transmit the timing pilot signal for responding to the PRACH within a preset time window.

In an embodiment, the timing pilot signal is at least one in number; and each pilot signal occupies K CCEs, where $K$ is an integer greater than 1.

In an embodiment, $K$ is an element in an aggregation level set of the PDCCH; or K is determined according to an aggregation level of the PDCCH.

In an embodiment, the CCEs occupied by each timing pilot signal and the CCEs occupied by a corresponding PDCCH belong to a same CCE candidate set; and position indexes of the CCEs occupied by each timing pilot signal in the CCE candidate set are same as or different from position indexes of the CCEs occupied by the corresponding PDCCH in the CCE candidate set.

In an embodiment, the access control apparatus further includes: a system message transmitting module configured to transmit a system message; and the system message including at least one of: that a relationship between an index of the PRACH and the timing pilot signal; or that a relationship between a RA-RNTI of the PRACH and the timing pilot signal.

The access control apparatus provided in this embodiment belongs to a same conception as the access control method provided in the above embodiments. For technical details not described in detail in this embodiment, reference may be made to any of the above embodiments, and this embodiment has same effect as performing the access control method.

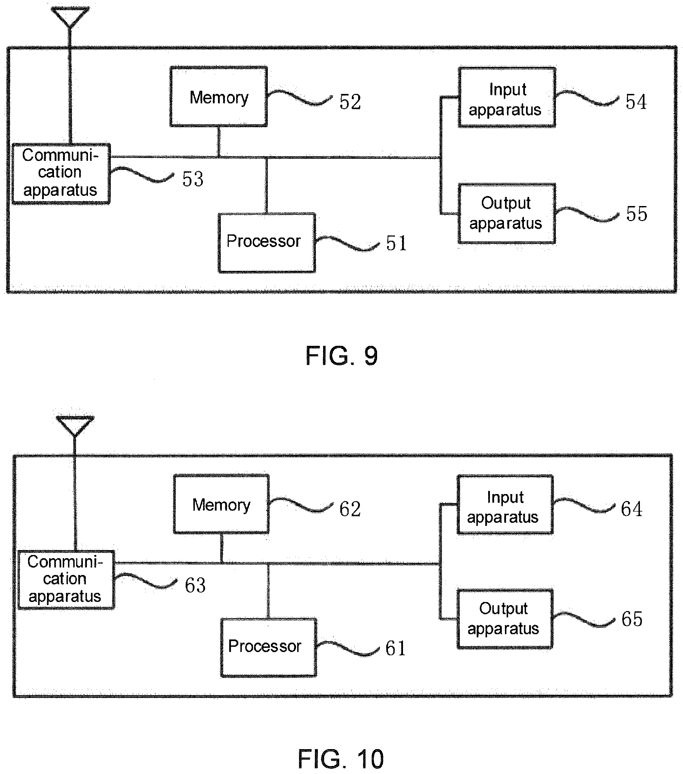

Embodiments of the present application provide a terminal. FIG. 9 is a schematic structural diagram of hardware of a terminal, in accordance with an embodiment. As shown in FIG. 9, the terminal provided in the present application includes a memory 52, a processor 51, and a computer program stored on the memory and executable on the processor, and the processor 51 implements the above random access method when executing the program.

There may be one or more processors 51 in the terminal, and one processor 51 is taken as an example in FIG. 9. The memory 52 is used for storing one or more programs, and the one or more programs are executed by the one or more processors 51, so that the one or more processors 51 implement the random access method described in the embodiments of the present application.

The terminal further includes: a communication apparatus 53, an input apparatus 54 and an output apparatus 55.

The processor 51, the memory 52, the communication apparatus 53, the input apparatus 54 and the output apparatus 55 that are in the terminal may be connected via a bus or in other manners, and connection via a bus is taken as an example in FIG. 9.

The input apparatus 54 can be used for receiving input numeric or character information, and generate key signal input related to user settings and function control of the terminal. The output apparatus 55 may include a display device such as a display screen.

The communication apparatus 53 may include a receiver and a transmitter. The communication apparatus 53 is configured to perform information transceiving communication according to the control of the processor 51.

The memory 52, as a computer-readable storage medium, can be configured to store software programs, computer-executable programs and modules, such as program instructions/modules corresponding to the random access method described in the embodiments of the present application (e.g., the channel transmitting module 310, the pilot receiving module 320 and the third message transmitting module 330 in the random access apparatus). The memory 52 may include a program storage area and a data storage area, where the program storage area can store an operating system and an application program required for at least one function, and the storage data area can store data created according to the use of the terminal, etc. In addition, the memory 52 may include high speed random access memory and may also include non-volatile memory, such as at least one magnetic disk storage device, flash memory device, or other non-volatile solid state storage device. In some examples, the memory 52 may further include a memory that is remotely provided relative to the processor 51, and this remote memory may be connected to the terminal via a network. Examples of the above network include, but are not limited to, the Internet, the intranet, the local area network, the mobile communication network, and combinations thereof.

Embodiments of the present application provide an access point. FIG. 10 is a schematic structural diagram of hardware of an access point, in accordance with an embodiment. As shown in FIG. 10, the access point provided in the present application includes a memory 62, a processor 61 and a computer program stored on the memory and executable on the processor, and the processor 61, when executing the program, implements the above access control method.

There may be one or more processors 61 in the access point, and one processor 61 is taken as an example in FIG. 10; the memory 62 is used for storing one or more programs; the one or more programs are executed by the one or more processors 61, so that the one or more processors 61 implement the access control method described in the embodiments of the present application.

The access point further includes a communication apparatus 63, an input apparatus 64 and an output apparatus 65.

The processor 61, the memory 62, the communication apparatus 63, the input apparatus 64 and the output apparatus 65 that are in the access point may be connected via a bus or in other manners, and connection via a bus is taken as an example in FIG. 10.

The input apparatus 64 can be used for receiving input numeric or character information, and generate key signal input related to user settings and function control of the access point. The output apparatus 65 may include a display device such as a display screen.

The communication apparatus 63 may include a receiver and a transmitter. The communication apparatus 63 is configured to perform information transceiving communication according to the control of the processor 61.

The memory 62, as a computer-readable storage medium, can be configured to store software programs, computer-executable programs and modules, such as program instructions/modules corresponding to the access control method described in the embodiments of the present application (e.g., the pilot transmitting module 410 and the fourth message transmitting module 420 in the access control apparatus). The memory 62 may include a program storage area and a data storage area, where the program storage area can store an operating system and an application program required for at least one function, and the storage data area can store data created according to the use of the access point, etc. In addition, the memory 62 may include high speed random access memory and may also include non-volatile memory, such as at least one magnetic disk storage device, flash memory device, or other non-volatile solid state storage device. In some examples, the memory 62 may further include a memory that is remotely provided relative to the processor 61, and this remote memory may be connected to the access point via a network. Examples of the above network include, but are not limited to, the Internet, the intranet, the local area network, the mobile communication network, and combinations thereof.

Embodiments of the present application provide a storage medium having stored a computer program that, when executed by a processor, implements the random access method or the access control method described in any of the embodiments of the present application.

The random access method includes: transmitting a PRACH; receiving a timing pilot signal for responding to the PRACH and detecting a RAR message and a PDCCH for indicating the RAR message, timings of the RAR message and the PDCCH being determined based on a timing of the timing pilot signal; and transmitting a third message according to the timing pilot signal, the RAR message and the PDCCH, the third message being used for requesting access to a network.

The access control method includes: transmitting, in a case of receiving a PRACH, a timing pilot signal for responding to the PRACH, a RAR message and a PDCCH for indicating the RAR message, timings of the RAR message and the PDCCH being determined based on a timing of the timing pilot signal; and transmitting, in a case of detecting a third message, a fourth message, the fourth message being used for informing a terminal that the terminal has accessed to a network.

The computer storage medium in the embodiments of the present application may take any combination of one or more computer-readable media. The computer-readable medium may be a computer-readable signal medium or a computer-readable storage medium. The computer-readable storage medium may be, for example, but not limited to: an electrical, magnetic, optical, electromagnetic, infrared or semiconductor system, apparatus or device, or any combination of the above. Examples (a non-exhaustive list) of computer-readable storage media include: an electrical connection having one or more wires, a portable computer disk, a hard disk, a random access memory (RAM), a read only memory (ROM), an erasable programmable read only memory (EPROM), a flash memory, an optical fiber, a portable CD-ROM, an optical storage device, a magnetic storage device, or any suitable combination of the above. The computer-readable storage medium may be any tangible medium that includes or stores a program for use by or in connection with an instruction execution system, apparatus, or device.

The computer-readable signal medium may include data signals propagated in a baseband or as part of a carrier wave, where the data signals carry computer-readable program code. Such propagated data signals may take many forms, including but not limited to: electromagnetic signals, optical signals, or any suitable combination of the above. The computer-readable signal medium may also be any computer-readable medium other than a computer-readable storage medium, which can send, propagate or transmit a program for use by or in conjunction with an instruction execution system, apparatus or device.

Program code included in the computer-readable medium may be transmitted using any appropriate medium, including but not limited to: wireless, wire, optical cable, radio frequency (RF), or any suitable combination of the above.

Computer program code for performing operations of the present application may be written in one or more programming languages or combinations thereof, including object-oriented programming languages such as Java, Smalltalk, C++, and a conventional procedural programming language, such as a "C" language or similar programming language. The program code may execute entirely on the user's computer, partly on the user's computer, as a stand-alone software package, partly on the user's computer and partly on a remote computer, or entirely on the remote computer or server. In a case of involving a remote computer, the remote computer may be connected to the user's computer through any kind of network, including a local area network (LAN) or a wide area network (WAN), or may be connected to an external computer (e.g., connected through the Internet using an Internet Service Provider).

The above descriptions are merely exemplary embodiments of the present application.

It will be understood by those skilled in the art that a term "user/terminal" covers any suitable type of wireless user equipment, such as a mobile phone, a portable data processing apparatus, a portable web browser or a vehicle-mounted mobile station.

In general, various embodiments of the present application may be implemented in hardware or special purpose circuits, software, logic, or any combination thereof. For example, some aspects may be implemented in hardware, while other aspects may be implemented in firmware or software, which may be executed by a controller, microprocessor or any other computing apparatus, although the present application is not limited thereto.

The embodiments of the present application may be implemented by a data processor of a mobile apparatus executing computer program instructions, for example, in a processor entity, or by hardware, or by a combination of software and hardware. The computer program instructions may be assembly instructions, instruction set architecture (ISA) instructions, machine instructions, machine-dependent instructions, microcode, firmware instructions, state setting data, or source or object code written in any combination of one or more programming languages.

Block diagrams of any logic flow in the drawings of the present application may represent program steps, or may represent interconnected logic circuits, modules and functions, or may represent a combination of program steps and logic circuits, modules and functions. The computer program may be stored on a memory. The memory may be of any type suitable for the local technical environment and may be implemented using any suitable data storage technology, such as, but not limited to, a read-only memory (ROM), a random access memory (RAM), an optical memory device and system (a digital video disc (DVD) or a compact disk (CD), etc. The computer-readable medium may include a non-transitory storage medium. The data processor may be of any type suitable for the local technical environment, such as, but not limited to, a general purpose computer, a special purpose computer, a microprocessor, a digital signal processor (DSP), an application specific integrated circuit (ASIC), a field-programmable gate array (FPGA), and a processor based on a multi-core processor architecture.

**Claims**

1. A random access method applied to a terminal, the method comprising:

   transmitting a physical random access channel, PRACH (110);
   receiving a timing pilot signal for responding to the PRACH and detecting a random access response, RAR, message and a physical downlink control channel, PDCCH, for indicating the RAR message, timings of the RAR message and the PDCCH being determined based on a timing of the timing pilot signal (120); and
   transmitting a third message according to the timing pilot signal, the RAR message and the PDCCH, the third message being used for requesting access to a network (130).

2. The method according to claim 1, wherein the timing pilot signal satisfies at least one of:

   that an index of the PRACH satisfies a one-to-one relationship with the timing pilot signal; or
   that a random access-radio network temporary identity, RA-RNTI, of the PRACH satisfies a one-to-one relationship with the timing pilot signal.

3. The method according to claim 1, wherein the third message includes an index of an optimal timing pilot signal obtained by measurement; and

   the timing pilot signal satisfies at least one of:
   that an index of the PRACH satisfies a one-to-many relationship with the timing pilot signal; or
   that a random access-radio network temporary identity, RA-RNTI, of the PRACH satisfies a one-to-many relationship with the timing pilot signal; wherein
   PDCCHs corresponding to different timing pilot signals are different, and RAR messages indicated by different PDCCHs are different; or
   PDCCHs corresponding to different timing pilot signals are different, and RAR messages indicated by different PDCCHs are same; or
   PDCCHs corresponding to different timing pilot signals are the same, and RAR messages indicated by different PDCCHs are same.

4. The method according to claim 1, wherein receiving the timing pilot signal for responding to the PRACH and detecting the RAR message and the PDCCH for indicating the RAR message (120), includes:
   detecting, in a case of receiving the timing pilot signal within a preset time window, the RAR message and the PDCCH; and
   the method further comprises:
   not detecting, in a case of not receiving the timing pilot signal within the preset time window, the RAR message and the PDCCH.

5. The method according to claim 1, wherein the timing pilot signal is at least one in number; and

   each timing pilot signal occupies K control channel elements, CCEs, K being an integer greater than 1, wherein
   K is an element in an aggregation level set of the PDCCH; or K is determined according to an aggregation level of the PDCCH; or
   the CCEs occupied by each timing pilot signal and CCEs occupied by a PDCCH corresponding to each timing pilot signal belong to a same CCE candidate set; and position indexes of the CCEs occupied by each timing pilot signal in the CCE candidate set are same as or different from position indexes of the CCEs occupied by the PDCCH corresponding to each timing pilot signal in the CCE candidate set.

6. The method according to claim 1, further comprising: receiving a system message, the system message including at least one of:

a relationship between an index of the PRACH and the timing pilot signal; or
a relationship between a random access-radio network temporary identity, RA-RNTI, of the PRACH and the timing pilot signal.

7. An access control method applied to an access point, the method comprising:

transmitting, in a case of receiving a physical random access channel, PRACH, a timing pilot signal for responding to the PRACH, a random access response, RAR, message and a physical downlink control channel, PDCCH, for indicating the RAR message, timings of the RAR message and the PDCCH being determined based on a timing of the timing pilot signal (210); and
transmitting, in a case of detecting a third message, a fourth message, the fourth message being used for informing a terminal that the terminal has accessed to a network (220).

8. The method according to claim 7, wherein transmitting the timing pilot signal for responding to the PRACH, the RAR message and the PDCCH for indicating the RAR message (210), includes: transmitting the timing pilot signal, the RAR message and the PDCCH according to an instruction of a control node or according to a negotiation result of an access point responding to the PRACH; or

transmitting the timing pilot signal for responding to the PRACH (210), includes: determining the timing pilot signal for responding to the PRACH according to the PRACH, and transmitting the timing pilot signal for responding to the PRACH within a preset time window; or the timing pilot signal satisfies at least one of:

that an index of the PRACH satisfies a one-to-one relationship with the timing pilot signal; or
that a random access-radio network temporary identity, RA-RNTI, of the PRACH satisfies a one-to-one relationship with the timing pilot signal.

9. The method according to claim 7, wherein the third message includes an index of an optimal timing pilot signal obtained by measurement; and the timing pilot signal satisfies at least one of:

that an index of the PRACH satisfies a one-to-many relationship with the timing pilot signal; or
that a random access-radio network temporary identity, RA-RNTI, of the PRACH satisfies a one-to-many relationship with the timing pilot signal.

10. The method according to claim 9, wherein

PDCCHs corresponding to different timing pilot signals are different, and RAR messages indicated by different PDCCHs are different; or
PDCCHs corresponding to different timing pilot signals are different, and RAR messages indicated by different PDCCHs are same; or
PDCCHs corresponding to different timing pilot signals are the same, and RAR messages indicated by different PDCCHs the same.

11. The method according to claim 9, wherein the timing pilot signal is at least one in number; the method further comprises: updating, according to the index of the optimal timing pilot signal, precoding information and timing information of each timing pilot signal and a set of access points transmitting the timing pilot signal.

12. The method according to claim 7, wherein the timing pilot signal is at least one in number; and

each pilot signal occupies K control channel elements, CCEs, K being an integer greater than 1, wherein
$K$ is an element in an aggregation level set of the PDCCH; or K is determined according to an aggregation level of the PDCCH; or
the CCEs occupied by each timing pilot signal and CCEs occupied by a PDCCH corresponding to each timing pilot signal belong to a same CCE candidate set; and position indexes of the CCEs occupied by each timing pilot signal in the CCE candidate set are same as or different from position indexes of the CCEs occupied by the PDCCH corresponding to each timing pilot signal in the CCE candidate set.

13. A terminal, comprising a memory (52), a processor (51), and a computer program stored on the memory (52) and executable on the processor (51), wherein the processor (51), when executing the program, implements the random access method according to any one of claims 1 to 6.

14. An access point, comprising a memory (62), a processor (61), and a computer program stored on the memory (62) and executable on the processor (61), wherein the processor (61), when executing the program, implements the access control method according to any one of claims 7 to 12.

**15.** A computer-readable storage medium having stored a computer program, wherein the program, when executed by a processor, implements the random access method according to any one of claims 1 to 6 or the access control method according to any one of claims 7 to 12.

**Patentansprüche**

**1.** Direktzugriffsverfahren, das auf ein Endgerät angewendet wird, wobei das Verfahren umfasst:

Senden eines physischen Direktzugriffskanals PRACH (110);
Empfangen eines Zeitsteuerungs-Pilotsignals zum Antworten auf den PRACH und Detektieren einer Direktzugriffsantwort-Nachricht RAR-Nachricht und eines physischen Downlink-Steuerkanals PDCCH zum Angeben der RAR-Nachricht, wobei Zeitpunkte der RAR-Nachricht und des PDCCH auf der Grundlage eines Zeitpunkts des Zeitsteuerungs-Pilotsignals (120) bestimmt werden; und
Senden einer dritten Nachricht gemäß dem Zeitsteuerungs-Pilotsignal, der RAR-Nachricht und dem PDCCH, wobei die dritte Nachricht zum Anfordern eines Zugriffs auf ein Netz verwendet wird (130).

**2.** Verfahren nach Anspruch 1, wobei das Zeitsteuerungs-Pilotsignal mindestens eines von Folgendem erfüllt:

dass ein Index des PRACH eine Eins-zu-eins-Beziehung mit dem Zeitsteuerungs-Pilotsignal erfüllt; oder
dass eine temporäre Direktzugriffs-Funknetzidentität RA-RNTI des PRACH eine Eins-zu-Eins-Beziehung mit dem Zeitsteuerungs-Pilotsignal erfüllt.

**3.** Verfahren nach Anspruch 1, wobei die dritte Nachricht einen Index eines durch Messung erhaltenen optimalen Zeitsteuerungs-Pilotsignals enthält; und das Zeitsteuerungs-Pilotsignal mindestens eines von Folgendem erfüllt:

dass ein Index des PRACH eine Eins-zu-viele-Beziehung mit dem Zeitsteuerungs-Pilotsignal erfüllt; oder
dass eine temporäre Direktzugriffs-Funknetzidentität RA-RNTI des PRACH eine Eins-zu-viele-Beziehung mit dem Zeitsteuerungs-Pilotsignal erfüllt; wobei
PDCCHs, die verschiedenen Zeitsteuerungs-Pilotsignalen entsprechen, unterschiedlich sind und RAR-Nachrichten, die durch verschiedene PDCCHs angegeben werden, unterschiedlich sind; oder
PDCCHs, die verschiedenen Zeitsteuerungs-Pilotsignalen entsprechen, unterschiedlich sind und RAR-Nachrichten, die durch verschiedene PDCCHs angegeben werden, gleich sind; oder
PDCCHs, die verschiedenen Zeitsteuerungs-Pilotsignalen entsprechen, gleich sind und RAR-Nachrichten, die durch verschiedene PDCCHs angegeben werden, gleich sind.

**4.** Verfahren nach Anspruch 1, wobei das Empfangen des Zeitsteuerungs-Pilotsignals zum Antworten auf den PRACH und das Detektieren der RAR-Nachricht und des PDCCH zum Angeben der RAR-Nachricht (120) umfasst:

in einem Fall des Empfangens des Zeitsteuerungs-Pilotsignals innerhalb eines voreingestellten Zeitfensters, Detektieren der RAR-Nachricht und des PDCCH; und
wobei das Verfahren des Weiteren umfasst:
in einem Fall des Nicht-Empfangens des Zeitsteuerungs-Pilotsignals innerhalb des voreingestellten Zeitfensters, Nicht-Detektieren der RAR-Nachricht und des PDCCH.

**5.** Verfahren nach Anspruch 1, wobei das Zeitsteuerungs-Pilotsignal der Anzahl nach mindestens eins ist; und

jedes Zeitsteuerungs-Pilotsignal K Steuerkanalelemente CCEs belegt, wobei K eine ganze Zahl größer als 1 ist, wobei
K ein Element in einem Aggregationsebenensatz des PDCCH ist; oder K gemäß einer Aggregationsebene des PDCCH bestimmt wird; oder
die durch jedes Zeitsteuerungs-Pilotsignal belegten CCEs und die durch einen PDCCH belegten CCEs, die jedem Zeitsteuerungs-Pilotsignal entsprechen, zu einem selben CCE-Kandidatensatz gehören; und die Positionsindizes der durch jedes Zeitsteuerungs-Pilotsignal belegten CCEs in dem CCE-Kandidatensatz die gleichen sind wie, oder andere sind als, Positionsindizes der durch den PDCCH belegten CCEs, die jedem Zeitsteuerungs-Pilotsignal in dem CCE-Kandidatensatz entsprechen.

**6.** Verfahren nach Anspruch 1, des Weiteren umfassend: Empfangen einer Systemmeldung, wobei die Systemmeldung mindestens eines von Folgendem enthält:

eine Beziehung zwischen einem Index des PRACH und dem Zeitsteuerungs-Pilotsignal; oder

eine Beziehung zwischen einer temporären Direktzugriffs-Funknetzidentität RA-RNTI des PRACH und dem Zeitsteuerungs-Pilotsignal.

7. Zugriffssteuerungsverfahren, das auf einen Zugangspunkt angewendet wird, wobei das Verfahren umfasst:

Senden, in einem Fall des Empfangens eines physischen Direktzugriffskanals PRACH, eines Zeitsteuerungs-Pilotsignals zum Antworten auf den PRACH, einer Direktzugriffsantwort-Nachricht RAR-Nachricht und eines physischen Downlink-Steuerkanals PDCCH zum Angeben der RAR-Nachricht, wobei Zeitpunkte der RAR-Nachricht und des PDCCH auf der Grundlage eines Zeitpunkts des Zeitsteuerungs-Pilotsignals (210) bestimmt werden; und
Senden, in einem Fall des Detektierens einer dritten Nachricht, einer vierten Nachricht, wobei die vierte Nachricht dazu verwendet wird, ein Endgerät darüber zu informieren, dass das Endgerät auf ein Netz zugegangen hat (220).

8. Verfahren nach Anspruch 7, wobei das Senden des Zeitsteuerungs-Pilotsignals zum Antworten auf den PRACH, der RAR-Nachricht und des PDCCH zum Angeben der RAR-Nachricht (210) umfasst:

Senden des Zeitsteuerungs-Pilotsignals, der RAR-Nachricht und des PDCCH gemäß einer Anweisung eines Steuerknotens oder gemäß einem Negozierungsergebnis eines Zugangspunkts, der auf den PRACH antwortet; oder
das Senden des Zeitsteuerungs-Pilotsignals zum Antworten auf den PRACH (210) umfasst:

Bestimmen des Zeitsteuerungs-Pilotsignals zum Antworten auf den PRACH gemäß dem PRACH, und Senden des Zeitsteuerungs-Pilotsignals zum Antworten auf den PRACH innerhalb eines voreingestellten Zeitfensters; oder
das Zeitsteuerungs-Pilotsignal mindestens eines von Folgendem erfüllt:

dass ein Index des PRACH eine Eins-zu-eins-Beziehung mit dem Zeitsteuerungs-Pilotsignal erfüllt; oder
dass eine temporäre Direktzugriffs-Funknetzidentität RA-RNTI des PRACH eine Eins-zu-Eins-Beziehung mit dem Zeitsteuerungs-Pilotsignal erfüllt.

9. Verfahren nach Anspruch 7, wobei die dritte Nachricht einen Index eines durch Messung erhaltenen optimalen Zeitsteuerungs-Pilotsignals enthält; und

das Zeitsteuerungs-Pilotsignal mindestens eines von Folgendem erfüllt:

dass ein Index des PRACH eine Eins-zu-viele-Beziehung mit dem Zeitsteuerungs-Pilotsignal erfüllt; oder
dass eine temporäre Direktzugriffs-Funknetzidentität RA-RNTI des PRACH eine Eins-zu-viele-Beziehung mit dem Zeitsteuerungs-Pilotsignal erfüllt.

10. Verfahren nach Anspruch 9, wobei

PDCCHs, die verschiedenen Zeitsteuerungs-Pilotsignalen entsprechen, unterschiedlich sind und RAR-Nachrichten, die durch verschiedene PDCCHs angegeben werden, unterschiedlich sind; oder
PDCCHs, die verschiedenen Zeitsteuerungs-Pilotsignalen entsprechen, unterschiedlich sind und RAR-Nachrichten, die durch verschiedene PDCCHs angegeben werden, gleich sind; oder
PDCCHs, die verschiedenen Zeitsteuerungs-Pilotsignalen entsprechen, gleich sind und RAR-Nachrichten, die durch verschiedene PDCCHs angegeben werden, gleich sind.

11. Verfahren nach Anspruch 9, wobei das Zeitsteuerungs-Pilotsignal der Anzahl nach mindestens eins ist;
wobei das Verfahren des Weiteren umfasst:
Aktualisieren, gemäß dem Index des optimalen Zeitsteuerungs-Pilotsignals, von Vorcodierungsinformationen und Zeitsteuerungsinformationen jedes Zeitsteuerungs-Pilotsignals und eines Satzes von Zugangspunkten, die das Zeitsteuerungs-Pilotsignal senden.

12. Verfahren nach Anspruch 7, wobei das Zeitsteuerungs-Pilotsignal der Anzahl nach mindestens eins ist; und

jedes Pilotsignal K Steuerkanalelemente CCEs belegt, wobei K eine ganze Zahl größer als 1 ist, wobei
$K$ ein Element in einem Aggregationsebenensatz des PDCCH ist; oder K gemäß einer Aggregationsebene des PDCCH bestimmt wird; oder
die durch jedes Zeitsteuerungs-Pilotsignal belegten CCEs und die durch einen PDCCH belegten CCEs, die jedem Zeitsteuerungs-Pilotsignal entsprechen, zu einem selben CCE-Kandidatensatz gehören; und die Positionsindizes der durch jedes Zeitsteuerungs-Pilotsignal belegten CCEs in dem CCE-Kandidatensatz die gleichen sind wie, oder andere sind als, Positionsindizes der durch den PDCCH belegten CCEs, die jedem Zeitsteuerungs-Pilotsignal in dem CCE-Kandidatensatz entsprechen.

**13.** Endgerät, umfassend einen Speicher (52), einen Prozessor (51) und ein Computerprogramm, das in dem Speicher (52) gespeichert ist und in dem Prozessor (51) ausführbar ist, wobei der Prozessor (51), wenn er das Programm ausführt, das Direktzugriffsverfahren nach einem der Ansprüche 1 bis 6 implementiert.

**14.** Zugangspunkt, umfassend einen Speicher (62), einen Prozessor (61) und ein Computerprogramm, das in dem Speicher (62) gespeichert ist und in dem Prozessor (61) ausführbar ist, wobei der Prozessor (61), wenn er das Programm ausführt, das Zugriffssteuerungsverfahren nach einem der Ansprüche 7 bis 12 implementiert.

**15.** Computerlesbares Speichermedium, auf dem ein Computerprogramm gespeichert ist, wobei das Programm, wenn es durch einen Prozessor ausgeführt wird, das Direktzugriffsverfahren nach einem der Ansprüche 1 bis 6 oder das Zugriffssteuerungsverfahren nach einem der Ansprüche 7 bis 12 implementiert.

**Revendications**

**1.** Procédé d'accès aléatoire appliqué à un terminal, le procédé comprenant :

la transmission d'un canal d'accès aléatoire physique, PRACH (110) ;
la réception d'un signal pilote de temporisation pour répondre au PRACH et la détection d'un message de réponse d'accès aléatoire, message RAR, et d'un canal de commande de liaison descendante physique, PDCCH, pour indiquer le message RAR, des temporisations du message RAR et du PDCCH étant déterminées sur la base d'une temporisation du signal pilote de temporisation (120) ; et
la transmission d'un troisième message en fonction du signal pilote de temporisation, du message RAR et du PDCCH, le troisième message étant utilisé pour demander un accès à un réseau (130).

**2.** Procédé selon la revendication 1, dans lequel le signal pilote de temporisation satisfait à au moins l'une des conditions suivantes :

qu'un indice du PRACH satisfait à une relation d'un à un avec le signal pilote de temporisation ; ou
qu'une identité temporaire de réseau radio d'accès aléatoire, RA-RNTI, du PRACH satisfait à une relation d'un à un avec le signal pilote de temporisation.

**3.** Procédé selon la revendication 1, dans lequel le troisième message inclut un indice d'un signal pilote de temporisation optimal obtenu par une mesure ; et

le signal pilote de temporisation satisfait à au moins l'une des conditions suivantes :

qu'un indice du PRACH satisfait à une relation d'un à plusieurs avec le signal pilote de temporisation ; ou
qu'une identité temporaire de réseau radio d'accès aléatoire, RA-RNTI, du PRACH satisfait à une relation d'un à plusieurs avec le signal pilote de temporisation ; dans lequel

des PDCCH correspondant à différents signaux pilotes de temporisation sont différents, et des messages RAR indiqués par différents PDCCH sont différents ; ou
des PDCCH correspondant à différents signaux pilotes de temporisation sont différents, et des messages RAR indiqués par différents PDCCH sont identiques ; ou
des PDCCH correspondant à différents signaux pilotes de temporisation sont identiques, et des messages RAR indiqués par différents PDCCH sont identiques.

**4.** Procédé selon la revendication 1, dans lequel la réception du signal pilote de temporisation pour répondre au PRACH et la détection du message RAR et du PDCCH pour indiquer le message RAR (120) incluent :
la détection, dans un cas de réception du signal pilote de temporisation dans une fenêtre de temps prédéfinie, du message RAR et du PDCCH ; et
le procédé comprend en outre :
la non-détection, dans un cas de non-réception du signal pilote de temporisation dans la fenêtre de temps prédéfinie, du message RAR et du PDCCH.

**5.** Procédé selon la revendication 1, dans lequel le signal pilote de temporisation est au nombre d'au moins un ; et

chaque signal pilote de temporisation occupe K éléments de canal de commande, des CCE, K étant un nombre entier supérieur à 1, dans lequel
$K$ est un élément dans un ensemble de niveaux d'agrégation du PDCCH ; ou $K$ est déterminé selon un niveau d'agrégation du PDCCH ; ou les CCE occupés par chaque signal pilote de temporisation et les CCE occupés par un PDCCH correspondant à chaque signal pilote de temporisation appartiennent à un même ensemble de candidats de CCE ; et des indices de position des CCE occupés par chaque signal pilote de temporisation dans l'ensemble de candidats de CCE sont identiques ou différents d'indices de position des CCE occupés par le PDCCH correspondant à chaque signal pilote de temporisation dans l'ensemble de candidats de CCE.

6. Procédé selon la revendication 1, comprenant en outre : la réception d'un message système, le message système incluant au moins l'une parmi :

    une relation entre un indice du PRACH et le signal pilote de temporisation ; ou une relation entre une identité temporaire de réseau radio d'accès aléatoire, RA-RNTI, du PRACH et le signal pilote de temporisation.

7. Procédé de commande d'accès appliqué à un point d'accès, le procédé comprenant :

    la transmission, dans un cas de réception d'un canal d'accès aléatoire physique, PRACH, d'un signal pilote de temporisation pour répondre au PRACH, d'un message de réponse d'accès aléatoire, message RAR, et d'un canal de commande de liaison descendante physique, PDCCH, pour indiquer le message RAR, des temporisations du message RAR et du PDCCH étant déterminées sur la base d'une temporisation du signal pilote de temporisation (210) ; et la transmission, dans un cas de détection d'un troisième message, d'un quatrième message, le quatrième message étant utilisé pour informer un terminal que le terminal a accédé à un réseau (220).

8. Procédé selon la revendication 7, dans lequel la transmission du signal pilote de temporisation pour répondre au PRACH, du message RAR et du PDCCH pour indiquer le message RAR (210) inclut : la transmission du signal pilote de temporisation, du message RAR et du PDCCH selon une instruction d'un nœud de commande ou selon un résultat de négociation d'un point d'accès répondant au PRACH ; ou

    la transmission du signal pilote de temporisation pour répondre au PRACH (210) inclut : la détermination du signal pilote de temporisation pour répondre au PRACH selon le PRACH, et la transmission du signal pilote de temporisation pour répondre au PRACH dans une fenêtre de temps prédéfinie ; ou

le signal pilote de temporisation satisfait à au moins l'une des conditions suivantes :

    qu'un indice du PRACH satisfait à une relation d'un à un avec le signal pilote de temporisation ; ou qu'une identité temporaire de réseau radio d'accès aléatoire, RA-RNTI, du PRACH satisfait à une relation d'un à un avec le signal pilote de temporisation.

9. Procédé selon la revendication 7, dans lequel le troisième message inclut un indice d'un signal pilote de temporisation optimal obtenu par une mesure ; et le signal pilote de temporisation satisfait à au moins l'une des conditions suivantes :

    qu'un indice du PRACH satisfait à une relation d'un à plusieurs avec le signal pilote de temporisation ; ou qu'une identité temporaire de réseau radio d'accès aléatoire, RA-RNTI, du PRACH satisfait à une relation d'un à plusieurs avec le signal pilote de temporisation.

10. Procédé selon la revendication 9, dans lequel

    des PDCCH correspondant à différents signaux pilotes de temporisation sont différents, et des messages RAR indiqués par différents PDCCH sont différents ; ou des PDCCH correspondant à différents signaux pilotes de temporisation sont différents, et des messages RAR indiqués par différents PDCCH sont identiques ; ou des PDCCH correspondant à différents signaux pilotes de temporisation sont identiques, et des messages RAR indiqués par différents PDCCH sont identiques.

11. Procédé selon la revendication 9, dans lequel le signal pilote de temporisation est au nombre d'au moins un ; le procédé comprend en outre : la mise à jour, selon l'indice du signal pilote de temporisation optimal, d'informations de précodage et d'informations de temporisation de chaque signal pilote de temporisation et d'un ensemble de points d'accès transmettant le signal pilote de temporisation.

12. Procédé selon la revendication 7, dans lequel le signal pilote de temporisation est au nombre d'au moins un ; et

    chaque signal pilote de temporisation occupe K éléments de canal de commande, des CCE, K étant un nombre entier supérieur à 1, dans lequel

*K* est un élément dans un ensemble de niveaux d'agrégation du PDCCH ; ou *K* est déterminé selon un niveau d'agrégation du PDCCH ; ou les CCE occupés par chaque signal pilote de temporisation et les CCE occupés par un PDCCH correspondant à chaque signal pilote de temporisation appartiennent à un même ensemble de candidats de CCE ; et

des indices de position des CCE occupés par chaque signal pilote de temporisation dans l'ensemble de candidats de CCE sont identiques ou différents d'indices de position des CCE occupés par le PDCCH correspondant à chaque signal pilote de temporisation dans l'ensemble de candidats de CCE.

13. Terminal, comprenant une mémoire (52), un processeur (51) et un programme informatique stocké sur la mémoire (52) et exécutable sur le processeur (51), dans lequel le processeur (51), lors de l'exécution du programme, met en œuvre le procédé d'accès aléatoire selon l'une quelconque des revendications 1 à 6.

14. Point d'accès, comprenant une mémoire (62), un processeur (61) et un programme informatique stocké sur la mémoire (62) et exécutable sur le processeur (61), dans lequel le processeur (61), lors de l'exécution du programme, met en œuvre le procédé de commande d'accès selon l'une quelconque des revendications 7 à 12.

15. Support de stockage lisible par ordinateur sur lequel est stocké un programme informatique, dans lequel le programme, lorsqu'il est exécuté par un processeur, met en œuvre le procédé d'accès aléatoire selon l'une quelconque des revendications 1 à 6 ou le procédé de commande d'accès selon l'une quelconque des revendications 7 à 12.

| Transmit a physical random access channel (PRACH) | 110 |

Receive a timing pilot signal for responding to the PRACH and detect a random access response (RAR) message and a physical downlink control channel (PDCCH) for indicating the RAR message; timings of the RAR message and the PDCCH being determined based on a timing of the timing pilot signal ~120

Transmit a third message according to the timing pilot signal, the RAR message and the PDCCH, the third message being used for requesting access to a network ~130

## FIG. 1

## FIG. 2

| Timing pilot signal 1 | → | PDCCH-1 | → | RAR-1 |
| Timing pilot signal 2 | → | PDCCH-2 | → | RAR-2 |
| Timing pilot signal 3 | → | PDCCH-3 | → | RAR-3 |

## FIG. 3

| Timing pilot signal 1 | → | PDCCH-1 | |
| Timing pilot signal 2 | → | PDCCH-2 | → RAR-1 |
| Timing pilot signal 3 | → | PDCCH-3 | |

## FIG. 4

```
┌──────────────┐
│ Timing pilot │───┐
│   signal 1   │   │
└──────────────┘   │
                   │
┌──────────────┐   │    ┌──────────┐      ┌─────────┐
│ Timing pilot │───┼──→ │ PDCCH-1  │ ───→ │  RAR-1  │
│   signal 2   │   │    └──────────┘      └─────────┘
└──────────────┘   │
                   │
┌──────────────┐   │
│ Timing pilot │───┘
│   signal 3   │
└──────────────┘
```

## FIG. 5

┌─────────────────────────────────────────────────────────────┐
│ Transmit a timing pilot signal for responding to the PRACH, a RAR │
│ message and a PDCCH for indicating the RAR message in a case │        210
│ of receiving a PRACH, timings of the RAR message and the │
│ PDCCH being determined based on a timing of the timing pilot │
│ signal │
└─────────────────────────────────────────────────────────────┘
                              │
                              ▼
┌─────────────────────────────────────────────────────────────┐
│ Transmit a fourth message in a case of detecting a third message, │
│ the fourth message being used for informing a terminal that the │      220
│ terminal has accessed to a network │
└─────────────────────────────────────────────────────────────┘

## FIG. 6

310

Channel transmitting module

320

Pilot receiving module

330

Third message transmitting module

FIG. 7

410

Pilot transmitting module

420

Fourth message transmitting module

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020305038 A1
- US 2019104551 A1